# EUROPÄISCHE PATENTSCHRIFT

(11) **EP 2 178 685 B1**
(45) Veröffentlichungstag und Bekanntmachung des Hinweises auf die Patenterteilung: **03.04.2013**
(21) Anmeldenummer: 08759082.4
(22) Anmeldetag: 06.06.2008
(51) Int. Cl.: B29B 9/06

(54) **STRANGGRANULATOR ZUM GRANULIEREN VON KUNSTOFFSTRÄNGEN**
EXTRUSION GRANULATOR FOR GRANULATION OF PLASTIC STRANDS
GRANULATEUR EN CONTINU POUR GRANULATION DE JONCS EN MATIÈRE PLASTIQUE

(30) Priorität: 14.06.2007 DE 102007027418
(43) Veröffentlichungstag der Anmeldung: 28.04.2010
(73) Patentinhaber: Automatik Plastics Machinery GmbH, 63762 Grossostheim (DE)
(72) Erfinder: SCHEURICH, Jochen, 63843 Niedernberg (DE)
(74) Vertreter: Bardehle, Heinz
(86) Internationale Anmeldenummer: PCT/EP2008/004545
(87) Internationale Veröffentlichungsnummer: WO 2008/151764

(56) Entgegenhaltungen:
- EP-A- 1 066 938
- US-A- 3 076 999

## Beschreibung

Die Erfindung bezieht sich auf einen Stranggranulator zum Granulieren von Kunststoffsträngen, die von einem Paar von Einzugswalzen erfasst und über eine Gleitbahn in Richtung auf einen Schneidrotor mit Gegenmesser zugeführt werden.

Bei derartigen Stranggranulatoren besteht das Problem, dass die nebeneinander über die Gleitbahn zugeführten Stränge ohne seitliche Führung dazu neigen, sich einander anzunähern und dabei zu verkleben oder sogar zu verklumpen, was dann zu einem entsprechend ungleichmäßigen und daher unbrauchbaren Granulat führt. Um diesem Problem zu begegnen, sind bereits verschiedene Vorschläge gemacht worden. So wird in der DE OS 1454750 vorgeschlagen, die Stränge zwischen einem endlosen, angetriebenen Förderband und der darunter angeordneten Gleitbahn zu führen. Für das Förderband sind zwei Bandförderwalzen vorgesehen, von denen die dem Schneidrotor benachbarte Förderwalze gleichzeitig als Einzugswalze dient. Dieses Förderband mit seinem Antrieb stellt einen beträchtlichen Aufwand dar, bei dem auch zu berücksichtigen ist, dass für verschieden dicke Stränge der Abstand zwischen Förderband und Gleitbahn jeweils individuell eingestellt werden muss.

Ein weiterer Vorschlag für die sichere Führung von mehreren benachbarten, über die Gleitbahn zugeführten Strängen ist in der DE AS 1284613 beschrieben, wo eine besonders gestaltete Gleitbahn erwähnt wird, die mit einer Anzahl paralleler Führungsnuten versehen ist (siehe dort Sp. 5, Z. 19/20). Eine solche Anordnung verhindert es, im Falle unterschiedlich dicker Stränge diese je nach Dicke der Stränge in größerer oder kleinerer Anzahl über die Breite der Gleitbahn zuzuführen, was die Flexibilität des Betriebes des betreffenden Stranggranulators entsprechend beeinträchtigt.

Schließlich sei auf die DE 69023410 T2 verwiesen, in der bei einem Stranggranulator der hier behandelten Art eine horizontale und vertikale Vibration der Stränge durch Sprühen einer Flüssigkeit von oberhalb einer Gleitbahn auf die Stränge minimiert werden kann. Diese Gestaltung benötigt eine erhebliche Menge der Flüssigkeit mit entsprechender Ableitung und ggf. Wiederzufuhr der Flüssigkeit, damit sie tatsächlich wirksam werden kann, die außerdem so ausgewählt werden muss, dass sie die Chemie der Stränge nicht beeinträchtigt.

Die US-A 3,076,999 offenbart eine Vorrichtung gemäß dem Oberbegriff des Anspruchs 1; sie betrifft eine Vorrichtung zum Granulieren von Kunststoffsträngen, die von einem Paar von Einzugswalzen erfasst und über eine Gleitbahn in Richtung auf einen Schneidrotor mit Gegenmesser zugeführt werden. Zum Entfernen von Feuchtigkeit von den Strängen wird eine Luftströmung verwendet, die auf Stränge auftrifft, wenn die Stränge die primären und sekundären Zufuhrbänder verlassen, um Restfeuchtigkeit zu entfernen.

Die EP 1 066 938 A1 offenbart eine Vorrichtung zum Granulieren von schmelzflüssig aus Düsen austretenden Strängen aus Kunststoff mit einem Granulator, bei der zwischen den Düsen und dem Granulator eine einen Kühlflüssigkeitsstrom führende Kühlstrecke und eine Entwässerungsstrecke vorgesehen ist, die dadurch gekennzeichnet ist, dass dem Granulator eine sich an die Entwässerungsstrecke anschliessende Einlaufauflage vorgeordnet ist, die mit mindestens einer quer zur Laufrichtung der Stränge angeordneten, als Stufe in der Einlaufauflage ausgebildeten Luftdüsenanordnung zur Erzeugung eines im Wesentlichen parallel zur Laufrichtung der Stränge gerichteten Luftstromes versehen ist, der die der Einlaufauflage zugeführten Stränge mitreisst.

Der Erfindung liegt die Aufgabe zugrunde, mit einer technisch einfachen und wenig aufwendigen Gestaltung eine sichere Führung der Stränge auf der Gleitbahn zu gewährleisten, ohne dass dabei die Gefahr besteht, dass die Stränge einer ihre chemische Zusammensetzung irgendwie beeinträchtigenden Beeinflussung ausgesetzt sind.

Erfindungsgemäß geschieht dies durch die Merkmale von Anspruch 1. Vorteilhafte Ausführungen der Erfindung sind in den Uneteransprüche charackterisiert.

Die für die Erzeugung des Luftstroms erforderliche Luft steht für die Verwendung im Stranggranulator in beliebiger Menge zur Verfügung. Sie ist auch besonders geeignet, die Stränge mit gleichem Abstand in Parallelführung und geführt senkrecht zum Schneidrotor zu halten, da der Luftstrom mit irgendeiner bekannten Ventitationseinrichtung in beliebiger Geschwindigkeit erzeugt werden kann und auch senkrecht bezogen auf die Querrichtung der Gleitbahn und den Schneidrotor auf die Stränge gerichtet werden kann, so dass es möglich ist, die Stränge von beiden Seiten mit gleichem Druck zu beaufschlagen und gegebenenfalls in die senkrechte Lage zu drängen, was bei einer ungeführten Länge der Stränge auf der Gleitbahn und wegen eines entsprechenden Einflusses des Schneidrotors notwendig sein kann, der nämlich aufgrund einer üblichen geringen schraubenartigen Führung seiner Zähne auf die Stränge eine seitliche Verschiebungskraft aufdrücken kann, was dann zu einem unerwünschten Schrägschnitt des Granulats führen würde, der durch die erfindungsgemäß erzwungene Parallel- und Senkrechtführung der Stränge vermieden wird.

Man kann für die Zuführung des Luftstromes oberhalb der Gleitbahn mehrere Einzeldüsen nebeneinander vorsehen, die jeweils einen eigenen Luftstrahl auf die Gleitbahn richten, wobei die Düsen so nebeneinander angeordnet sind, dass sich vor der Gleitbahn insgesamt ein im Wesentlichen gleichmäßiger Luftstrom ergibt.

Es ist aber auch möglich, für die Zuführung des Luftstromes oberhalb der Gleitbahn eine Schlitzdüse vorzusehen, aus der dann ein sich über die gesamte Breite der Gleitbahn erstreckender schmaler Luftstrom herausgepresst wird.

Ausführungsbeispiele sind in den Figuren dargestellt. Es zeigen
- Figur 1: in prinzipieller Darstellung einen Stranggranulator mit Gleitbahn und Einzugswalzen mit einer Einzeldüse in Seitensicht;
- Figur 2: die gleiche Anordnung in perspektivischer Sicht von oben mit nebeneinander angeordneten Einzeldüsen;
- Figur 3: die Anordnung gemäß Figur 1 in einer Ansicht von oben mit einer Schlitzdüse;
- Figur 4: eine perspektivische Ansicht von Einzeldüsen und der über die Gleitbahn geführten Stränge mit Darstellung der Luftströmung.

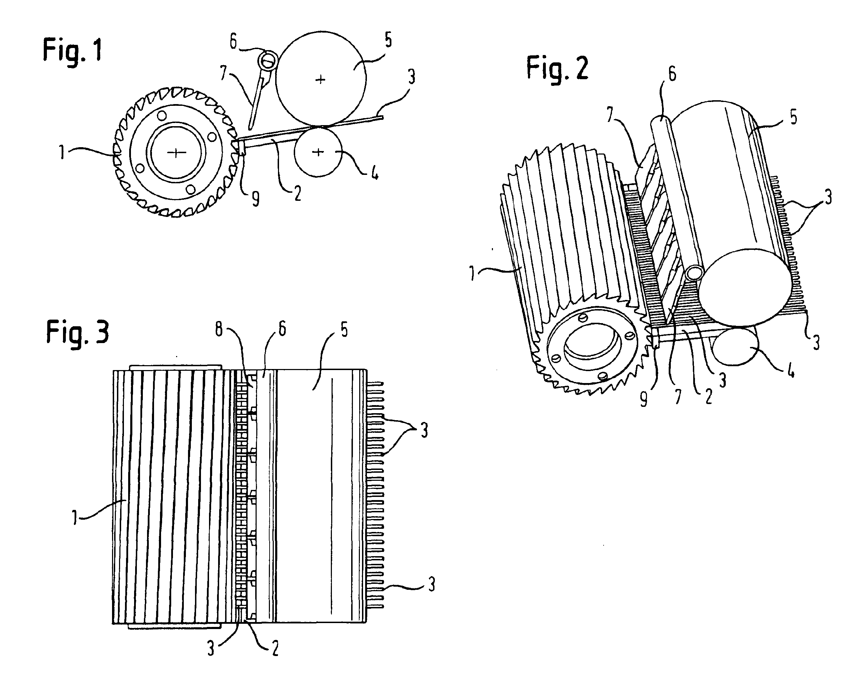

Der in der Figur 1 prinzipiell in Seitensicht dargestellte Stranggranulator enthält den Schneidrotor 1, auf den die Gleitbahn 2 zu gerichtet ist. Über die Gleitbahn werden dem Schneirotor 1 eine Mehrzahl von Kunststoffsträngen 3 zugeführt, die vor der Gleitbahn 2 von den Einzugswalzen 4 und 5 erfasst und in Richtung auf den Schneidrotor 1und das Gegenmesser 9 über die Gleitbahn 2 geschoben werden. Insoweit handelt es sich um eine dem Stand der Technik entsprechende Gestaltung.

Oberhalb der Gleitbahn 2 ist der Luftzuführungskanal 6 angeordnet, aus dem einzelne Düsen 7 (siehe auch Figur 2) abzweigen, über die jeweils ein dem Luftzuführungskanal 6 zugeführter Luftstrom in leichter Schräglage auf die Gleitbahn 2 und damit auf die von ihr getragenen Kunststoffstränge gerichtet wird. Wie ersichtlich, enden die Düsen 7 in nur geringem Abstand oberhalb der Gleitbahn 2 (z.B. 1 bis 3cm), wodurch der Luftstrom von der Gleitbahn 2 gleichmäßig auf die einzelnen Kunststoffstränge und vor allem deren Zwischenräume in senkrechter Richtung zum Schneidrotor gelenkt wird, wodurch, ausgehend von dem in die Zwischenräume gedrückten Luftstrom, die einzelnen Kunststoffstränge seitlich sicher auf Abstand gehalten werden, da sich bei einer Annäherung zweier benachbarter Kunststoffstränge der dabei entstehende verringerte Zwischenraum zwischen den Kunststoffsträngen eine entsprechende Druckerhöhung zwischen den Kunststoffsträngen bewirkt, so dass diese immer wieder in ihre ursprüngliche Lage in senkrechter Richtung ausgerichtet werden, in der die Abstände der Kunststoffstränge gleich sind, wodurch sich quer über die Kunststoffstränge eine hinsichtlich ihres Abstandes ausgleichende Druckwirkung automatisch ergibt.

In der Figur 2 ist die in der Figur 1 in Seitensicht dargestellte Anordnung in einer perspektivischen Draufsicht wiedergegeben. An den Luftzuführungskanal 6 sind mehrere parallel nebeneinander angeordnete Einzeldüsen 7 angeschlossen, aus denen schräg von oben der über den Luftzuführungskanal 6 jeweils zugeführte Luftstrahl auf die Stränge 3 trifft und für deren gleichmäßige Verteilung über die Gleitbahn 2 sorgt. Dabei sind die Einzeldüsen so nebeneinander angeordnet, dass sich in Bezug auf die Stränge 3 ein im Wesentlichen gleichmäßiger Luftstrom ergibt.

Figur 3 zeigt in Draufsicht eine Abwandlung der Gestaltung gemäß den Figuren 1 und 2. Gemäß Figur 3 ist an den Luftzuführungskanal 6 eine sich quer über die Gleitbahn 2 erstreckende Schlitzdüse 8 angeschlossen, die gewissermaßen eine Zusammenfassung der Einzeldüsen 7 gemäß Figur 2 darstellt. Aus dieser Schlitzdüse tritt - ähnlich wie bei der Anordnung gemäß Figur 2 - ein schmaler Luftstrom aus, der so gerichtet ist, wie dies in der Figur 1 dargestellt ist und somit die einzelnen Stränge 3 in ihrer senkrecht zu den Einzugswalzen 4 und 5 erzwungenen Lage sicher hält, was dann zum dem gewünschten gleichmäßigen und rechtwinkelig geschnittenen Granulat führt. Die Schlitzdüse 8 stellt eine konstruktive Vereinfachung gegenüber der Gestaltung gemäß Figur 2 dar.

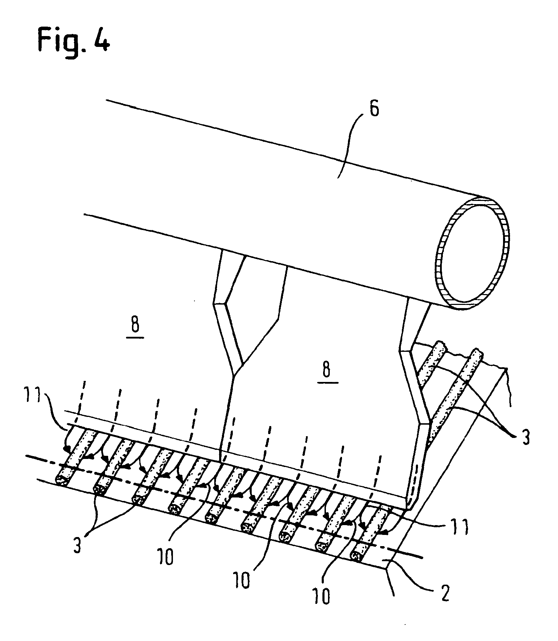

In der Figur 4 ist der sich auf die Luftströmung beziehende Teil des erfindungsgemäßen Stranggranulators in perspektivischer Ansicht wiedergegeben. An den Luftzuführungskanal 6 sind die sich über die gesamte Breite der Gleitbahn 2 erstreckenden Einzeldüsen 8 angeschlossen, die einen aus ihr austretenden Luftstrom führen, der durch die einzelnen Stränge 3 in entsprechend viele Einzelströme 11 aufgespalten wird, die zunächst parallel zueinander und senkrecht auf den Schneidrotor (Schneidrotor 1 in Figur 3) zulaufen. In der Figur 4 ist die Richtung der Zähne des Schneidrotors und des Gegenmesser (Schneidrotor 1 und Gegenmesser 9 in Figuren 1 und 2) als strichpunktierte Linie angedeutet. Die Einwirkung der einzelnen Luftströme 11 auf die Stränge 3 ist durch die seitlich auf die Stränge 3 zugerichteten Abbiegungen 10 der einzelnen Luftströme 11 dargestellt, durch die die Beeinflussung der Richtung der Stränge 3 in der Weise herbeigeführt wird, dass durch den beiderseitigen gleichmäßigen Druck auf die Stränge 3 diese senkrecht von den Einzeldüsen 8 weg in Richtung auf den Schneidrotor geführt werden. Durch die in bekannter Weise leicht einstellbare Geschwindigkeit der einzelnen Luftströme 11 (einstellbarer Druck in dem Luftzuführungskanal 6) lässt sich die jeweils erforderliche auf die Stränge 3 wirkende Ausrichtungskraft bestimmt. Die Stränge 3 werden also sicher senkrecht zum Gegenmesser 9 und zu dem Schneidrotor 1 geführt, so dass mit dieser Vorrichtung ein rechtwinkelig geschnittenes Granulat gewährleistet werden kann.

## Patentansprüche

1. Stranggranulator zum Granulieren von Kunststoffsträngen (3), die von einem Paar von Einzugswalzen (4, 5) erfasst und über eine Gleitbahn (2) in Richtung auf einen Schneidrotor (1) mit Gegenmesser (9) zugeführt werden, **dadurch gekennzeichnet, dass** ein hinter den Einzugswalzen (4, 5) auf die Gleitbahn (2) gerichteter und von dieser senkrecht auf den Schneidrotor (1) zu gelenkter Luftstrom mit solcher Geschwindigkeit auf die von der Gleitbahn (2) getragenen Stränge (3) auftrifft, dass die Stränge von beiden Seiten mit gleichem Druck beaufschlagt werden, wobei die Stränge (3) von dem Luftstrom in Parallelführung gehalten sind.

2. Stranggranulator nach Anspruch 1, **dadurch gekennzeichnet, dass** für die Zuführung des Luftstroms oberhalb der Gleitbahn (2) mehrere Einzeldüsen (7) nebeneinander vorgesehen sind, die jeweils einen eigenen Luftstrahl auf die Gleitbahn (2) richten, wobei die Düsen (7) so nebeneinander angeordnet sind, dass sich vor der Gleitbahn (2) insgesamt ein im Wesentlichen gleichmäßiger Luftstrom ergibt.

3. Stranggranulator nach Anspruch 1, **dadurch gekennzeichnet, dass** für die Zuführung des Luftstroms oberhalb der Gleitbahn (2) eine Schlitzdüse (8) vorgesehen ist.

## Claims

1. Extrusion granulator for granulating plastic strands (3), which are gripped by a pair of feed rollers (4, 5) and are conveyed over a slideway (2) in the direction of a cutting rotor (1) with an opposing blade (9), **characterized in that** an air stream directed onto the slideway (2) behind the feed rollers (4, 5) and deflected perpendicularly towards the cutting roller (1) by said slideway impinges on the strands (3) carried by the slideway (2) with such a speed that that the strands (3) on both sides are exposed to the same pressure, whereby the strands (3) are held in a parallel orientation by the air stream.

2. Extrusion granulator according to claim 1, **characterized in that** multiple individual nozzles (7) adjacent to one another are provided to supply the air stream above the slideway (2), each of which nozzles (7) directs its own air jet onto the slideway (2), wherein the nozzles are arranged adjacent to one another such that overall, an essentially uniform air stream results in front of the slideway (2).

3. Extrusion granulator according to claim 1, **characterized in that** a slot nozzle (8) is provided to supply the air stream above the slideway (2).

## Revendications

1. Granulateur à joncs pour la granulation de joncs de plastique (3) qui sont saisis par une paire de rouleaux d'alimentation (4, 5) et acheminés via un coulisseau vers un rotor de coupe (1) avec contre-couteau (9), **caractérisé en ce que** un écoulement d'air situé derrière les rouleaux d'alimentation (4, 5), dirigé vers le coulisseau (2), d'où il est dirigé verticalement en direction du rotor de coupe (1), survient sur le jonc (3) supporté par le coulisseau à une telle vitesse, que le jonc est ouvert des deux côtés par une pression égale, les joncs (3) étant maintenus par l'écoulement d'air dans le système de guidage parallèle.

2. Granulateur à joncs selon la revendication 1, **caractérisé en ce que** plusieurs buses individuelles (7) sont disposées l'une à côté de l'autre au-dessus du coulisseau (2) en vue d'acheminer l'écoulement d'air, soufflant chacune un jet d'air en direction du coulisseau (2), les buses (7) étant disposées l'une à côté de l'autre de façon à engendrer un écoulement d'air essentiellement égal devant le coulisseau (2).

3. Granulateur à joncs selon la revendication 1, **caractérisé en ce qu'**une buse à fente (8) est disposée au-dessus du coulisseau (2) dans le but d'acheminer l'écoulement d'air.
